# EUROPEAN PATENT APPLICATION

(11) **EP 4 848 203 A1**
(43) Date of publication of application: **02.12.2026**
(21) Application number: 26177323.8
(22) Date of filing: 07.05.2026
(51) Int. Cl.: G06T 7/00

(54) **AUTOMATED ANOMALY DETECTION IN A DIGITAL IMAGING SYSTEM**

(30) Priority: 30.05.2025 US 202519224374
(71) Applicant: Services Pétroliers Schlumberger, 75007 Paris (FR); Schlumberger Technology B.V., 2514 JG The Hague (NL)
(72) Inventor: WANTZ, Francois, 92142 Clamart (FR); BARNECHE, Anne-Maelle, 92142 Clamart (FR)
(74) Representative: Schlumberger Intellectual Property Department

(57) **Abstract**

A method for acquiring a calibrated digital image of a drill cuttings sample includes acquiring imaging data with a field of view that encompasses a sample holder in an imaging system prior to acquiring the digital image of the drill cuttings sample, automatically determining whether or not an anomaly is present in the field of view from the imaging data, prompting a user of the imaging system when it is determined that an anomaly is present; and acquiring a digital image of the drill cuttings sample on the tray when it is determined that an anomaly is not present.

## Description

### CROSS REFERENCE TO RELATED APPLICATIONS

None.

### BACKGROUND

In subterranean drilling operations, such as for oil and gas exploration and production, formation cuttings are generated by the drilling activity. These cuttings have long been evaluated and characterized to better understand the properties and structure of subsurface rock. The cuttings are commonly collected after passing the shale shakers, then cleaned and photographed for analysis. In recent years, there has been a desire to perform such image evaluation and characterization automatically (or semi-automatically) to reduce human cost and shorten the turnaround time of the interpretation. However, implementing such automation is far from routine.

One difficulty with implementing automated image evaluation routines is detecting and eliminating anomalous (or poor quality or unsatisfactory) images among the many acquired images or detecting anomalous conditions that result in the acquisition of poor quality images. There are numerous contributing factors that can cause poor quality images to be acquired. There is a need in the industry to identify and correct anomalous imaging conditions that lead to poor image quality and to prevent the image acquisition (or flag an image or alert a user) when such conditions are present.

### BRIEF DESCRIPTION OF THE DRAWINGS

For a more complete understanding of the disclosed subject matter, and advantages thereof, reference is now made to the following descriptions taken in conjunction with the accompanying drawings, in which:
FIG. 1 depicts an example drilling rig including a disclosed system for acquiring digital images of drill cuttings.
FIG. 2 depicts one example embodiment of the system shown on FIG. 1.
FIG. 3 depicts a flowchart of one example method for detecting anomalous imaging conditions.
FIG. 4 depicts one example cuttings sample tray including a sample area and a calibration area.
FIGS. 5A and 5B (collectively FIG. 5) schematically depict example static images of the field of view (black dashed line) prior to deployment of the sample tray.
FIGS. 6A and 6B (collectively FIG. 6) schematically depict example static images of a misaligned sample tray containing cuttings particles deployed in a field of view (black dashed line).
FIGS. 7A and 7B (collectively FIG. 7) schematically depict example static images of a properly aligned sample tray containing cuttings particles deployed in a field of view (black dashed line).
FIG. 8 depicts a flow chart of another example method for detecting anomalous imaging conditions.

### DETAILED DESCRIPTION

Embodiment of the present disclosure include systems and methods for acquiring a calibrated digital image of a drill cuttings sample. In one example embodiment, a disclosed method includes acquiring imaging data with a field of view that encompasses a sample holder in an imaging system prior to acquiring the digital image of the drill cuttings sample, automatically determining whether or not an anomaly is present in the field of view from the imaging data, prompting a user of the imaging system when it is determined that an anomaly is present; and acquiring a digital image of the drill cuttings sample on the tray when it is determined that an anomaly is not present.

Example embodiments disclosed herein may provide various technical advantages and improvements over the prior art. For example, the disclosed embodiments may provide for the consistent and repeatable acquisition of high-quality digital images for drill cuttings characterization. Moreover, the disclosed embodiments may further be self-diagnostic in that they may provide for the automatic detection of anomalies that can degrade image quality.

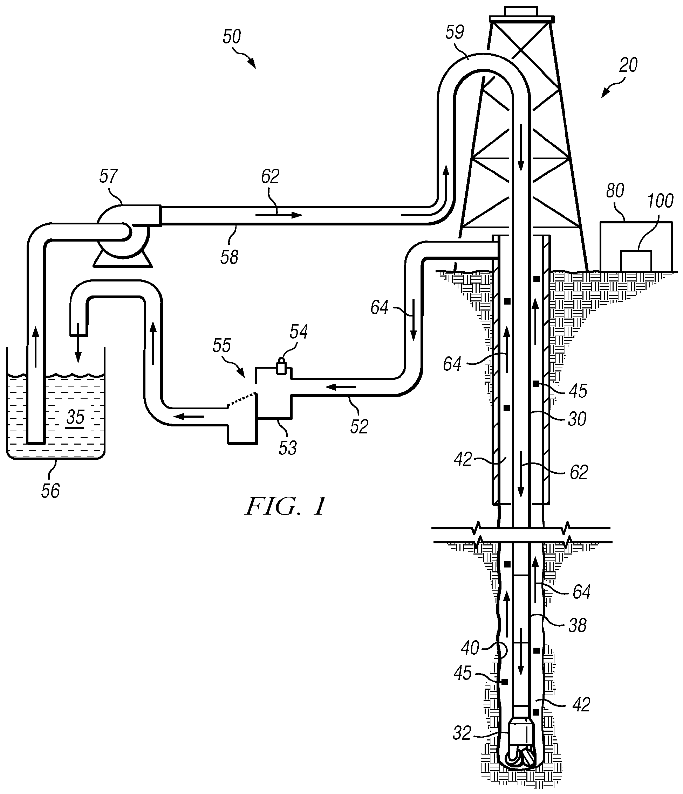

FIG. 1 depicts an example drilling rig 20 including a system 100 for evaluating cuttings particles that are removed from circulating drilling fluid on the rig. The drilling rig 20 may be positioned over a subterranean formation (not shown). The rig 20 may include, for example, a derrick and a hoisting apparatus (also not shown) for raising and lowering a drill string 30, which, as shown, extends into wellbore 40 and includes, for example, a drill bit 32 and one or more downhole measurement tools 38 (e.g., a logging while drilling tool or a measurement while drilling tool) in a bottom hole assembly (BHA) above the bit 32. Suitable drilling systems, for example, including drilling, steering, logging, and other downhole tools are well known in the art.

While FIG. 1 depicts a land rig 20, it will be appreciated that the disclosed embodiments are equally well suited for land rigs or offshore rigs. As is known to those of ordinary skill, offshore rigs commonly include a platform deployed atop a riser that extends from the sea floor to the surface. The drill string extends downward from the platform, through the riser, and into the wellbore through a blowout preventer (BOP) located on the sea floor. The disclosed embodiments are not limited in these regards.

Drilling rig 20 further includes a surface system 50 for controlling the flow of drilling fluid used on the rig (e.g., used in drilling the wellbore 40). In the example rig depicted, drilling fluid 35 is pumped downhole (as depicted at 62), for example, via a conventional mud pump 57. The drilling fluid 35 may be pumped, for example, through a standpipe 58 and mud hose 59 in route to the drill string 30. The drilling fluid 35 typically emerges from the drill string 30 at or near the drill bit 32 and creates an upward flow 64 of mud through the wellbore annulus 42 (the annular space between the drill string and the wellbore wall). The drilling fluid 35 then flows through a return conduit 52 to a mud pit system 56 where may be recirculated. It will be appreciated that the terms drilling fluid and mud are used synonymously herein.

The circulating drilling fluid 35 is intended to perform many functions during a drilling operation, one of which is to carrying drill cuttings 45 to the surface (in upward flow 64). The drill cuttings 45 are commonly removed from the returning mud via a shale shaker 55 (or other similar solids control equipment) in the return conduit (e.g., immediately upstream of the mud pits 56). Formation gases that are released during drilling may also be carried to the surface in the circulating drilling fluid. These gasses are commonly removed from the fluid, for example, via a degasser or gas trap 54 located in or near a header tank 53 that is immediately upstream of the shale shaker 55 in the example depiction. The drill cuttings 45 may be evaluated to characterize the subterranean formation and/or estimate various properties thereof as known to those of ordinary skill.

The rig 20 may include a system 100 configured to take and evaluate digital images of the drill cuttings as described in more detail below. The system 100 may be deployed at the rig site (e.g., in an onsite laboratory 80) or offsite. The disclosed embodiments are not limited in this regard. The system 100 may include computer hardware and software configured to acquire digital image of a drill cuttings sample as well as detect anomalous imaging conditions. To perform these functions, the hardware may include one or more processors (e.g., microprocessors) which may be connected to one or more data storage devices (e.g., hard drives or solid state memory). As is known to those of ordinary skill, the processors may be further connected to a network, e.g., to receive the images from a networked camera system (not shown) or another computer system. It will, of course, be understood that the disclosed embodiments are not limited the use of or the configuration of any particular computer hardware and/or software.

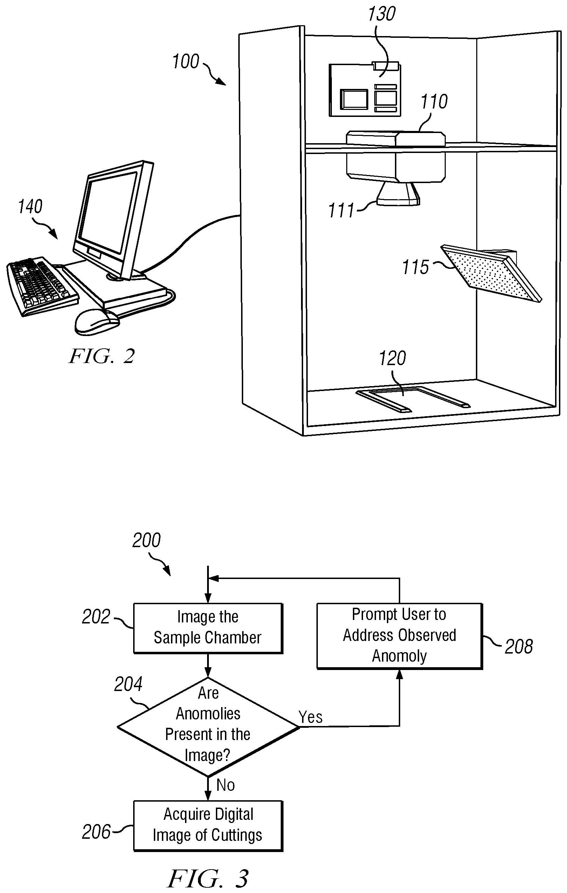

FIG. 2 depicts an example system 100 for taking digital images of drill cuttings particles. It will be appreciated that the disclosed embodiments are not limited to any particular system configuration. The example system 100 may include a sample holder 120 that is configured to receive a removable tray that is in turn configured to carry the cuttings particles into the system for imaging. The tray may be sized and shaped (in coordination with a camera lens system and the sample holder) to hold a sufficient quantity of cuttings and to fill a field of view in an image acquisition device. The tray may be advantageously removable from the sample holder 120 such that it may be filled with cuttings and then redeployed in the chamber within the field of view of the camera 110.

The system 100 may further include at least one light source 115, for example, including a white light source or ultraviolet light source configured to illuminate the sample holder 120 (and cuttings placed on the tray). The light source 115 may include, for example, a light emitting diode (LED), diode array, or other suitable light sources capable of illuminating the cuttings particles. The system 100 may further include a camera 110 and a corresponding lens 111 deployed above the sample holder 120, for example, mounted on or in a divider disposed between upper and lower chambers of the system 100. The camera 110 may advantageously include a high resolution color camera, for example, including a 10 or 20 (or more) megapixel image sensor. Substantially any suitable lens 111 may be utilized. The lens 111 may be configured to provide sharp (focused) images to the image sensor, for example, including a 25 mm lens. The lens 111 may alternatively include a variable zoom lens.

The system 100 may further include a controller 130 such as a computer board (or motherboard) configured to control operation of the camera 110, the lens 111, the lights 115, and/or the location or orientation of the sample holder 120. The controller 130 may include one or more processors (e.g., microprocessors) which may be connected to one or more data storage devices (e.g., hard drives or solid state memory) and may be further configured to network (e.g., communicate) with external devices (e.g., an external computer system 140), for example, via a hard wire or wireless connection. As described in more detail below, the controller 130 and/or the computer system 140 may be configured to identify and optionally correct anomalous imaging conditions.

During a mud logging operation, field personnel (e.g., mud loggers or cuttings sample catchers) remove the tray from the image acquisition system, place a sample of cuttings particles on the tray, and redeploy the tray in the chamber of the image acquisition system. From time to time the sample tray may be inadvertently misplaced (placed in the wrong location in the sample holder) such that a portion of the cuttings tray or calibration area is outside the field of view of the camera (or lens). Such misplacement of the sample tray may interfere with image calibration and characterization. Moreover, removing and redeploying the sample tray can cause debris (e.g., small or loose cuttings particles) to fall inside the chamber. The debris may in turn interfere with subsequent redeployment of the tray, for example, by preventing proper deployment of the tray or by becoming lodged underneath the tray and tilting the tray or lifting it above the focal plane of the camera. Debris can also spill on dedicated areas reserved for image quality control and may therefore impact subsequent image calibration.

It will be appreciated that the impact of tray displacement or debris in the sample chamber may not be readily observed by the system user. Moreover, it will be further appreciated, that even seemingly minor changes in the focal plane or tilt angle of the tray can have a significant impact on image quality and subsequent artificial intelligence processing (e.g., particle texture extraction, lithology classification, grain size determination, and/or porosity classification). Furthermore, even a seemingly minor tray misplacement or the presence of very small particles (such as cuttings dust) in the calibration area can significantly impact calibration results, such as color, brightness, and sharpness calibrations. As noted above, there is a need in the industry for methods and systems that automatically detect anomalous imaging conditions and thereby promote the acquisition of high-quality digital images.

FIG. 3 depicts a flowchart of one example method 200 for detecting anomalous imaging conditions. Method 200 includes acquiring imaging data of a sample holder region of the imaging system while deploying a tray of cuttings particles at 202 (e.g., before acquiring the digital image of the particles). In example embodiments, live video may be acquired and evaluated before, during, and/or after deployment of the tray. In other example embodiments, static images may be acquired before, during, and/or after deployment of the tray. At 204, the static images and/or video data may be evaluated (processed) to determine whether or not one or more anomalous conditions are present. If no anomalies are observed, a digital image of the cuttings particles may be acquired at 206. On the other hand, when one or more anomalies are observed, the system user may be prompted to address the problem at 208. The prompting may further include information indicating the type of anomaly as well as corrective actions that may be taken by the user to remedy the anomaly (i.e., to remove the anomalous conditions). In example embodiments, the prompt at 208 may include one or more static images that indicate (or highlight or otherwise demarcate) the anomaly such that the user may correct the problem. The method then returns to 202 as indicated.

In example embodiments, the evaluation at 204 may be configured to detect debris or liquid contaminant within the field of view when the sample tray is removed or when the sample tray and cuttings particles are deployed in the chamber. The evaluation may further check that the calibration area and/or the sample area are fully visible and within a specified position (or within an acceptable range of pixels). Robust anomaly detection may in turn enable the classification of anomalies into categories such as liquids or solid contamination.

Software anomaly detection may be achieved through a variety of image processing methods. For example, image processing techniques such as the difference of Gaussians, optical flow, or Gabor filters (to name a few) may be employed to detect anomalies. Moreover, more advanced, machine learning (ML) based algorithms such as convolutional neural networks (CNNs), transformers, one-class support vector machines (SVM), or isolation forests may be employed to enhance anomaly detection accuracy as well as to classify (or identify) the anomaly type. By leveraging these diverse algorithms, the disclosed embodiments may effectively identify and classify anomalies, ensuring that system users are promptly notified and high quality digital images are acquired.

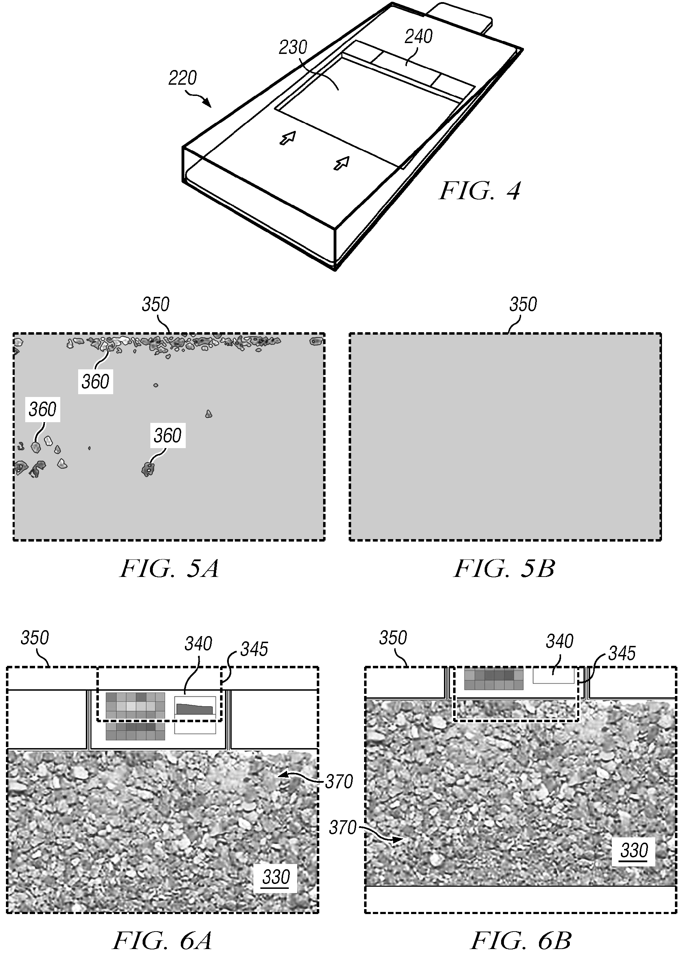

FIG. 4 depicts one example sample tray 220. The depicted example tray 220 is configured to receive drill cuttings (e.g., a washed and screened sample of drill cuttings particles) and includes a sample area 230 for receiving the cuttings and a calibration or quality control (QC) area 240. In example embodiments, the sample area 230 may be recessed into the tray for containing the cuttings particles. The sample area 230 may be plastic or metal and may optionally have a high contrast (vivid) background color (such as red or magenta) to enhance later particle identification and segmentation in the acquired images. The tray 220 may be sized and shaped (in coordination with the camera lens system) to hold a sufficient quantity of the drill cuttings and to fill the field of view of the camera lens system (along with the corresponding calibration area 240).

The calibration area 240 may include one or more calibration regions configured for color calibration (e.g., including colored squares), grey scale calibration (e.g., including grey squares), and a focus (or spatial resolution) calibration (e.g., including an angled edge). In example embodiments the calibration area may include, for example, the commercially available Rez Checker target available from Imatest or the MacBeth color checker. It will of course be recognized that the disclosed embodiments are not limited to any particular calibration area configuration.

With continued reference to FIGS. 2-4 and further reference to FIGS. 5-7, system 100 and method 200 may be configured to detect various types of anomalies. In a first type of anomaly, the sample area and/or the calibration area are not properly aligned and/or positioned within the camera frame (field of view) or the correct region of the frame. In general, it is desirable for both the sample area and the calibration area to be fully visible and located within predetermined regions of the frame to avoid data loss (e.g., owing to a portion of the sample area being located outside of the frame) and to ensure high-quality calibration. To ensure proper alignment, the evaluation at 204 may include a field of view check for at least one of the sample area and calibration area.

FIGS. 5A and 5B (collectively FIG. 5) schematically depict example static images of the field of view 350 (black dashed line) prior to deployment of the tray in the sample holder. In FIG. 5A, cuttings debris 360 remain in the field of view (e.g., in the sample holder 320). As noted above, such debris 360 can interfere with proper deployment of the tray in the sample holder and may thereby result in the acquisition of poor quality (e.g., out of focus) images. In FIG. 6B, the field of view 350 is essentially free or clear of debris as is desirable.

FIGS. 6A and 6B (collectively FIG. 6) schematically depict example static images of a misaligned tray containing cuttings particles deployed in a field of view 350 (black dashed line). In these example embodiments, the tray is intended to be deployed (e.g., inserted) into position in the sample holder from a location off the bottom of the figure towards the top of the figure. Moreover, in both figures, the sample area 330 contains cuttings particles 370. In FIG. 6A, the tray is not fully inserted into the sample holder such that a portion of the sample area 330 is outside the field of view 350 (at the bottom of the figure) and the calibration area 340 is not the correct position with a predetermined calibration region in the field of view as indicated at 345. In FIG. 5B, the tray is inserted too far (over inserted) such that a portion of the calibration area 340 is outside of the field of view 350 (and therefore outside the predetermined calibration region 345).

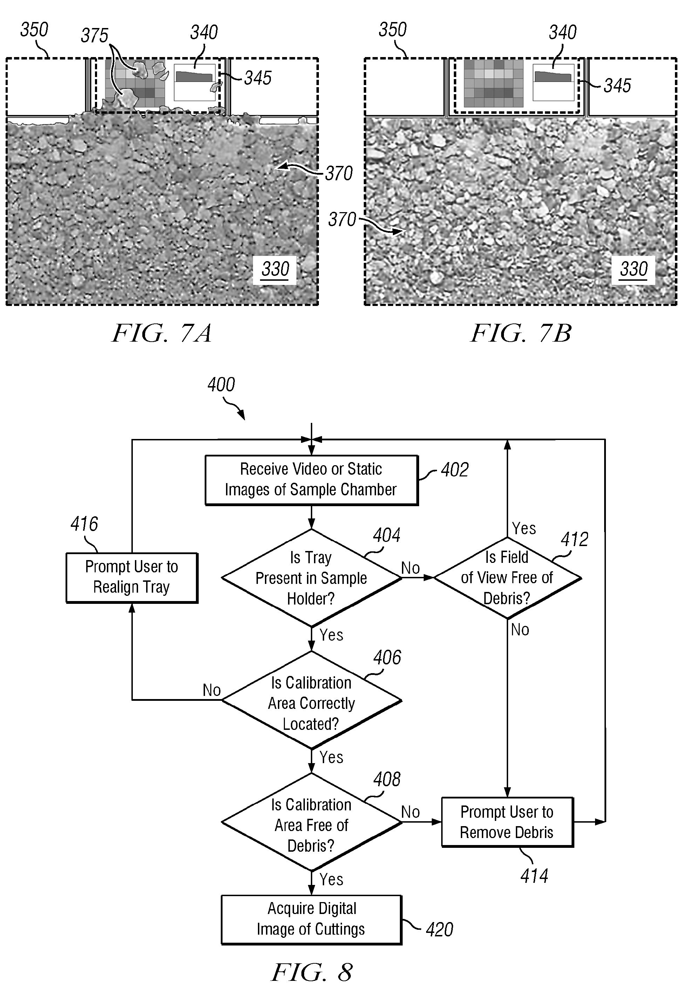

FIGS. 7A and 7B (collectively FIG. 7) schematically depict example static images of a properly aligned tray containing cuttings particles deployed in a field of view 350 (black dashed line). In both figures, the sample area 330 contains cuttings particles 370 (as in FIG. 6). In FIG. 7A, the tray is properly positioned with the calibration area 340 within the calibration region 345, however cuttings particles 375 are present (e.g., spilled) on the calibration region 340 such that some of the calibration features are blocked or obstructed by the particles 375. As noted above, such debris 375 can interfere with proper image calibration and may thereby result in the acquisition of poor-quality images. In FIG. 7B, the tray is properly positioned with the calibration area 340 within the calibration region 345 at the upper edge of the image. Moreover, the calibration area 340 is essentially free of debris or other material that may shield the calibration features as is desirable.

Turning now to FIG. 8 a flow chart of another example method 400 for detecting anomalous imaging conditions is depicted. Live feed video or static image input is received at 402. The video or static image input is evaluated at 404 to determine whether or not the tray is deployed in the sample holder within the imaging system. The evaluation at 404 may include one or more of a number of image processing techniques. For example, a simple frame subtraction might be computed comparing the live image with a prior image not including the tray. A Gaussian mixture model (GMM) or a mixture of Gaussians may be used to model the background and detect any changes of the field of view. Optical flow may be utilized to estimate frame to frame motion (which would be indicative of tray deployment). Histogram matching may also be used to classify tray versus no tray conditions. These image processing techniques may also be supplemented with the use of a proximity sensor in the chamber.

When the tray is present in the sample holder at 404, the method checks to determine whether or not the calibration area of the tray is in a predetermined calibration region within the field of view at 406. The evaluation at 406 may include one or more of a number of image processing techniques. For example, template matching may be used to detect the location of the calibration area (or specific features therein), particularly when it is shifted out of position. Template matching has been advantageously found to be robust to small environmental changes and small occlusions. Edge detection may be employed to detect edges of the calibration area (or edges of specific features therein). Color based detection (e.g., histogram matching or hue, saturation, and value thresholding) may also be used to detected and locate particular features within the calibration area. Feature detection, such as Scale-Invariant Feature Transform (SIFT) or oriented FAST and rotated BRIEF (ORB) may also be used to detect specific features or contrasts within the calibration area.

When the calibration area is within the field of view at 406 the method checks to determine whether or not the calibration area is clean or free of obstructing debris at 408. The evaluation at 408 may include one or more of a number of image processing techniques. For example, a simple difference between the calibration area and a reference image of the calibration area may be computed. Significant or localized differences may indicate the presence of debris or a liquid film. Outlier detection may be used to detect debris, for example, by obtaining the expected range of values that are the result of various small environmental changes and then using techniques like z-score analysis, interquartile region (IQR) or isolation-forest and the like to detect the outliers. Visual anomaly detection using with neural networks may also be employed and may advantageously differentiate between debris and liquid. For example, a small pretrained encoder may be used to project an image in latent space. An additional layer may be used to train classification (e.g., clean, liquid, or solid debris). In another example, a model similar to an auto-encoder may be trained such that anomalies may be detected by comparing output with input of the model.

When the calibration area is free of debris at 408, the method allows a digital image to be acquired at 420 and may optionally notify the user that the system has passed the preacquisition quality control checks outlined in the method.

Returning to 404, when it is determined that the tray is not (yet) deployed on the sample holder, the method proceeds to 412 to determine whether or not the field of view is clean or free of debris. The evaluation at 412 may include one or more of a number of image processing techniques, for example, as described above with respect to 404 and 408. When debris are visible, the user is prompted to check and clean the sample holder area at 414 before returning to 402. When no debris are visible the method returns to 402.

Returning to 406, when it is determined that the calibration area is outside (or not fully within) in the specified calibration region within the field of view, the user is prompted to better align the tray (or to remove and redeployed the tray) at 416 before returning to 402.

It will be understood that the present disclosure includes numerous embodiments. These embodiments include, but are not limited to, the following embodiments.

In a first embodiment, a computerized method for acquiring a digital image of a drill cuttings sample comprises acquiring imaging data with a field of view that encompasses a sample holder in an imaging system prior to acquiring the digital image of the drill cuttings sample, the sample holder configured to receive a tray containing the drill cuttings sample; automatically determining whether or not an anomaly is present in the field of view from the imaging data; prompting a user of the imaging system when it is determined that an anomaly is present; and acquiring a digital image of the drill cuttings sample on the tray when it is determined that an anomaly is not present.

A second embodiment may include the first embodiment, wherein the acquired imaging data comprises video data acquired before and after deployment of the tray on the sample holder.

A third embodiment may include any one of the first through second embodiments, wherein the acquired imaging data comprise static image data acquired before and after deployment of the tray on the sample holder.

A fourth embodiment may include any one of the first through third embodiments, wherein the anomaly comprises debris on the sample holder prior to deployment of the tray on the sample holder.

A fifth embodiment may include the fourth embodiment, wherein the automatically determining comprises using at least one of frame subtraction, Gaussian mixture modelling, optical flow, and histogram matching to determine whether or not the debris is present.

A sixth embodiment may include any one of the first through fifth embodiments, wherein the tray comprises a calibration area; and the anomaly comprises at least a portion of the calibration area being outside of a predetermined calibration region of the field of view when the tray is deployed on the sample holder.

A seventh embodiment may include the sixth embodiment, wherein the automatically determining comprises using at least one of template matching, edge detection, color-based histogram matching, hue, saturation, and value thresholding, scale-invariant feature transform (SIFT) feature detection, and oriented FAST and rotated BRIEF (ORB) feature detection to determine whether or not the the calibration area is outside of the predetermined calibration region.

An eighth embodiment may include any one of the first through seventh embodiments, wherein the tray comprises a calibration area; and the anomaly comprises debris on the calibration area when the tray is deployed on the sample holder.

A ninth embodiment may include the eighth embodiment, wherein the automatically determining comprises using at least one of frame or region subtraction with a reference, outlier detection with z-score analysis, interquartile range, or isolation-forest, visual anomaly detection with a neural network, and auto encoder modeling to determine whether or not the debris is present on the calibration region.

A tenth embodiment may include any one of the first through ninth embodiments, wherein the prompting further includes providing information to the user indicating the type of anomaly present and a recommended corrective action to remedy the anomaly.

In an eleventh embodiment a system for taking digital images of a drill cuttings sample comprises a sample holder configured to receive a tray of drill cuttings particles, the tray including a calibration area and a cuttings sample region configured to receive the drill cuttings sample; a digital camera deployed and configured to acquire imaging data with a field of view that encompasses the sample holder and to take a digital image of the drill cuttings sample in the tray; and a processor configured to: receive the imaging data from the digital camera before taking the digital image of the drill cuttings sample; automatically determine whether or not an anomaly is present in the field of view from the imaging data; prompt a user when it is determined that an anomaly is present; and acquire the digital image of the cuttings sample when it is determined that an anomaly is not present.

A twelfth embodiment may include the eleventh embodiment, wherein the received imaging data comprises static image data or video image data acquired before and after deployment of the tray on the sample holder.

A thirteenth embodiment may include any one of the eleventh through twelfth embodiments, wherein the anomaly comprises at least one of (i) debris on the sample holder prior to deployment of the tray thereon, (ii) at least a portion of the calibration area being outside of a predetermined calibration region in the field of view when the tray is deployed on the sample holder, and (iii) debris on the calibration area when the tray is deployed on the sample holder.

A fourteenth embodiment may include the thirteenth embodiment, wherein the automatically determining comprises using at least one of frame subtraction, Gaussian mixture modelling, optical flow, and histogram matching, template matching, edge detection, color-based histogram matching, hue, saturation, and value thresholding, scale-invariant feature transform (SIFT) feature detection, oriented FAST and rotated BRIEF (ORB) feature detection, outlier detection with z-score analysis, interquartile range, or isolation-forest, visual anomaly detection with a neural network, and auto encoder modeling to automatically determine whether or not the anomaly is present.

A fifteenth embodiment may include any one of the eleventh through fourteenth embodiments, wherein the prompting further includes providing information to the user indicating the type of anomaly present and a recommended corrective action to remedy the anomaly.

In a sixteenth embodiment an automatic computerized method for acquiring a digital image of a drill cuttings sample comprises acquiring imaging data with a field of view that encompasses a sample holder in an imaging system prior to acquiring the digital image of the drill cuttings sample; automatically determining from the imaging data whether or not a tray including the drill cuttings sample is deployed in the imaging system; automatically determining from the imaging data whether or not a calibration area of the tray is within a predetermined calibration region of the field of view when the tray is deployed in the imaging system; automatically determining from the imaging data whether or not debris are visible in the calibration area when the calibration area is within a predetermined calibration region of the field of view; prompting a user to check and/or clean the imaging system when the debris are visible in the calibration area; prompting the user to re-align the tray when the calibration area is not within the predetermined calibration region; and acquiring the digital image of the drill cuttings sample when the tray is deployed in the imaging system, the calibration area is within the predetermined calibration region, and debris are not visible in the calibration area.

A seventeenth embodiment may include the sixteenth embodiment, further comprising automatically determining from the imaging data whether or not debris are visible in the field of view when the tray is not deployed in the imaging system; and prompting the user to check and/or clean the imaging system when the when the debris are visible in the field of view.

An eighteenth embodiment may include any one of the sixteenth through seventeenth embodiments, wherein the acquired imaging data comprises static image data or video image data taken before and after deployment of the tray in the imaging system.

A nineteenth embodiment may include any one of the sixteenth through eighteenth embodiments, wherein the automatically determining from the image data comprises using at least one of frame subtraction, Gaussian mixture modelling, optical flow, and histogram matching, template matching, edge detection, color-based histogram matching, hue, saturation, and value thresholding, scale-invariant feature transform (SIFT) feature detection, oriented FAST and rotated BRIEF (ORB) feature detection, outlier detection with z-score analysis, interquartile range, or isolation-forest, visual anomaly detection with a neural network, and auto encoder modeling.

A twentieth embodiment may include any one of the sixteenth through nineteenth embodiments, wherein the prompting further includes providing at least one image from the imaging data that indicates the type of anomaly present and illustrates recommended corrective action to remedy the anomaly.

Although an automated anomaly detection in a digital imaging system has been described in detail, it should be understood that various changes, substitutions and alternations can be made herein without departing from the spirit and scope of the disclosure as defined by the appended claims.

## Claims

1. A computerized method for acquiring a digital image of a drill cuttings sample; the method comprising:
acquiring imaging data with a field of view that encompasses a sample holder in an imaging system prior to acquiring the digital image of the drill cuttings sample, the sample holder configured to receive a tray containing the drill cuttings sample;
automatically determining whether or not an anomaly is present in the field of view from the imaging data;
prompting a user of the imaging system when it is determined that an anomaly is present; and
acquiring a digital image of the drill cuttings sample on the tray when it is determined that an anomaly is not present.

2. The method of claim 1, wherein the acquired imaging data comprises video data acquired before and after deployment of the tray on the sample holder.

3. A system for taking digital images of a drill cuttings sample, the system comprising:
a sample holder configured to receive a tray of drill cuttings particles, the tray including a calibration area and a cuttings sample region configured to receive the drill cuttings sample;
a digital camera deployed and configured to acquire imaging data with a field of view that encompasses the sample holder and to take a digital image of the drill cuttings sample in the tray; and
a processor configured to:
receive the imaging data from the digital camera before taking the digital image of the drill cuttings sample;
automatically determine whether or not an anomaly is present in the field of view from the imaging data;
prompt a user when it is determined that an anomaly is present; and
acquire the digital image of the cuttings sample when it is determined that an anomaly is not present.

4. The system of claim 3, wherein the received imaging data comprises static image data or video image data acquired before and after deployment of the tray on the sample holder.

5. The system of claim 3 or 4, wherein the anomaly comprises at least one of (i) debris on the sample holder prior to deployment of the tray thereon, (ii) at least a portion of the calibration area being outside of a predetermined calibration region in the field of view when the tray is deployed on the sample holder, and (iii) debris on the calibration area when the tray is deployed on the sample holder.

6. The system of claim 5, wherein the automatically determining comprises using at least one of frame subtraction, Gaussian mixture modelling, optical flow, and histogram matching, template matching, edge detection, color-based histogram matching, hue, saturation, and value thresholding, scale-invariant feature transform (SIFT) feature detection, oriented FAST and rotated BRIEF (ORB) feature detection, outlier detection with z-score analysis, interquartile range, or isolation-forest, visual anomaly detection with a neural network, and auto encoder modeling to automatically determine whether or not the anomaly is present.

7. An automatic computerized method for acquiring a digital image of a drill cuttings sample; the method comprising:
acquiring imaging data with a field of view that encompasses a sample holder in an imaging system prior to acquiring the digital image of the drill cuttings sample;
automatically determining from the imaging data whether or not a tray including the drill cuttings sample is deployed in the imaging system;
automatically determining from the imaging data whether or not a calibration area of the tray is within a predetermined calibration region of the field of view when the tray is deployed in the imaging system;
automatically determining from the imaging data whether or not debris are visible in the calibration area when the calibration area is within a predetermined calibration region of the field of view;
prompting a user to check and/or clean the imaging system when the debris are visible in the calibration area;
prompting the user to re-align the tray when the calibration area is not within the predetermined calibration region; and
acquiring the digital image of the drill cuttings sample when the tray is deployed in the imaging system, the calibration area is within the predetermined calibration region, and debris are not visible in the calibration area.

8. The method of claim 7, further comprising:
automatically determining from the imaging data whether or not debris are visible in the field of view when the tray is not deployed in the imaging system; and
prompting the user to check and/or clean the imaging system when the when the debris are visible in the field of view.

9. The method of claim 7 or 8, wherein the acquired imaging data comprises static image data or video image data taken before and after deployment of the tray in the imaging system.

10. The method of claim 7, 8 or 9, wherein the prompting further includes providing at least one image from the imaging data that indicates the type of anomaly present and illustrates recommended corrective action to remedy the anomaly.
